# EUROPEAN PATENT APPLICATION

(11) **EP 2 804 391 A1**
(43) Date of publication of application: **19.11.2014**
(21) Application number: 13167671.0
(22) Date of filing: 14.05.2013
(51) Int. Cl.: H04N 21/436, H04N 21/4623, H04N 21/418, H04N 21/4405, H04N 21/4408, H04N 21/426, H04N 21/4367, H04N 21/4385, H04N 21/443

(54) **Common Interface hub**

(71) Applicant: TP Vision Holding B.V., 1097 JB Amsterdam (NL)
(72) Inventor: Brondijk, Robert, 1097 JB Amsterdam (NL); Muijen, Maarten, 1097 JB Amsterdam (NL)
(74) Representative: Nederlandsch Octrooibureau

(57) **Abstract**

The invention provides a Common Interface, Cl, hub (30) comprising a
- Cl unit (33) for receiving a Conditional Access Module, CAM (20);
- at least one virtual host unit (31, 32), each virtual host unit being configured to:
- setup a secure authenticated channel, SAC, connection with the CAM, when a CAM is connected to the Cl unit (33);
- setup a data connection with a respective peripheral device (35, 36, 37);
and
- receive content data from the CAM via the SAC and transmit said content data to the respective peripheral device (35, 36, 37).

## Description

### Field of the invention

The invention relates to a Common Interface hub for connecting to a Conditional Access Module, CAM.

### Background of the invention

CI (Common Interface) and CI Plus (Common Interface plus) are content control systems which are currently in use for satellite, terrestrial, and cable television program reception, in particular in the Digital Video Broadcasting DVB-S, DVB-T, and DVB-C standards. The CI or CI Plus system comprises a Content Access Module (CAM or CAM) which, when inserted into the corresponding Common Interface slot of a compatible TV set (typically called the CI host), allows a user to subscribe and watch a pay TV service from a pay TV service operator, without requiring an additional set-top-box. The CAM typically has a slot for inserting a smartcard that is issued by the service operator. The smart card, inserted into or embedded in the CI Plus-CAM, controls the decrypting of those TV programs to which the user is allowed access.

The main difference between CI and CI Plus is that in CI Plus, a trusted channel is formed between the CAM and television receiver, so that the decrypted content can be re-encrypted, using a key that is known at both ends of the trusted channel, before it is sent back from the CAM to the receiver. That makes it harder for third parties to "steal" the CAM-decrypted content by sampling the out-going signal from the CAM.

In known CI and CI Plus systems, the physical interface between the CAM and the receiver is formed using a (variant of) a PCMCIA (Personal Computer Memory Card International Association) connector. The PCMCIA standard dates from 1991, and the technology is becoming obsolete. Faster communication links are available, which are also less expensive to implement and require less physical space.

A typical household nowadays has a plurality of devices that are capable of decoding and displaying or recording audio/video streams. In known CI and CI Plus systems, the CAM is physically connected to the display/recording device. This makes it difficult, if not impossible, to use a single CAM for a plurality of devices

Therefore, there is a need for an improved link between a CAM and peripheral devices.

### Summary of the invention

The invention provides a Common Interface, CI, hub comprising a
- CI unit for receiving a Conditional Access Module, CAM;
- at least one virtual host unit, each virtual host unit being configured to:
   - setup a Secure Authenticated Channel, SAC, connection with the CAM, when a CAM is connected to the CI unit;
   - setup a connection with a respective peripheral device; and
   - receive data from the CAM via the SAC connection and transmit said data to the respective peripheral device.

The CI host may initiate the SAC set-up, while the module opens the session on the CC resource. In an embodiment, the host may have only one CC session. In an alternative embodiment, the host can have more than one CC session simultaneously. The data received from the CAM via the SAC may be content data, for example data representing audio/video or multimedia content.

It is understood that in this application, the Secure Authenticated Channel (SAC) connection may refer to all communications between CI unit and CAM, that is, not just control traffic (messages over a control channel, which is typically called the SAC) but also CA encrypted content (e.g. transferred from CI unit to CAM), and CC encrypted content (e.g. from CAM to CI unit). The term SAC connection thus can comprise all communications between a CI host and a CAM for decrypting CA encrypted (Audio/Video) content, including the encrypted and decrypted content. The term SAC connection can also be interpreted as a SAC-based (content) data connection, that is a (content) data connection controlled via a SAC.

In an embodiment according the invention, the at least one virtual host unit comprises a virtual CAM for setting up a connection with the respective peripheral.

In an embodiment according the invention, the at least one virtual host unit is configured for setting up a connection to each of a plurality of peripheral devices.

In an embodiment according the invention, the at least one virtual host unit comprises a distribution unit for distributing data received via the SAC connection to at least one peripheral device.

In an embodiment according the invention, the distribution unit is configured to decrypt the data received via the SAC connection and to re-encrypt said data prior to distribution to the at least one peripheral device.

In an embodiment according the invention, the CI hub comprises a plurality of virtual host units.

In an embodiment according the invention, the CI unit is configured to maintain one Secure Authenticated Channel with the CAM and is comprises a demultiplexing layer for selectively transmitting data received from the CAM to a corresponding virtual host unit.

In an embodiment according the invention, the CI unit is configured to maintain for a Secure Authenticated Channel with the CAM for each virtual host unit.

In an embodiment according the invention, the data represents a broadcasting program, such as a Transport Stream or an ISO BMFF file

In an embodiment according the invention, the CAM is connected to the CI unit via a USB connection.

In an embodiment according the invention, the USB connection comprises a bidirectional control pipe for control traffic related to the data.

In an embodiment according the invention, the USB connection comprises one bidirectional control pipe for control traffic related to the data for each SAC connection between the CI unit and the CAM.

In an embodiment according the invention, the USB connection comprises for each peripheral device two unidirectional data pipes, one for transmitting CA encrypted data to the CAM and one for receiving CA decrypted data from the CAM.

The invention further provides a method for distributing CA decrypted data from a CAM to a peripheral device , the method comprising:
- setting up one Secure Authenticated Channel, SAC connection, between each of at least one virtual host unit and the CAM;
- setting up a connection between each of the at least one virtual host unit and at least one respective peripheral device ;
- receiving data from the CAM via the SAC connection and transmitting said data to the at least one respective peripheral device.

### Brief description of the Figures

On the attached drawing sheets,
- figure 1 schematically shows a system of a CAM and a digital TV receiver according to an embodiment of the invention;
- figure 2 schematically shows a CAM according to an embodiment of the invention;
- figure 3A schematically shows a CI hub according to an embodiment of the invention;
- figure 3B schematically shows a CI hub according to a further embodiment of the invention;
- figure 3C schematically shows a virtual host according to an embodiment of the invention;
- figure 4 schematically shows a TV according to an embodiment of the invention;
- figure 5 schematically shows a method for setting up connections with two peripheral devices according to an embodiment of the invention;
- figure 6a schematically shows USB pipes between a CAM and a CI hub according to an embodiment of the invention;
- figure 6b schematically shows USB pipes between a CAM and a CI hub according to a further embodiment of the invention; and
- figure 7 shows a data chunk for transmission over a logical data pipe.

### Detailed description

Exemplary embodiments of the invention will now be explained in detail. The examples relate mostly to CI Plus embodiments, but the invention is not limited to CI Plus. It is understood that the term Common Interface (CI) comprises both "plain" CI (that is, without "Content Control" (CC) re-encryption of the "Conditional Access" (CA) decrypted data) and more secure CI variants, such as CI Plus.

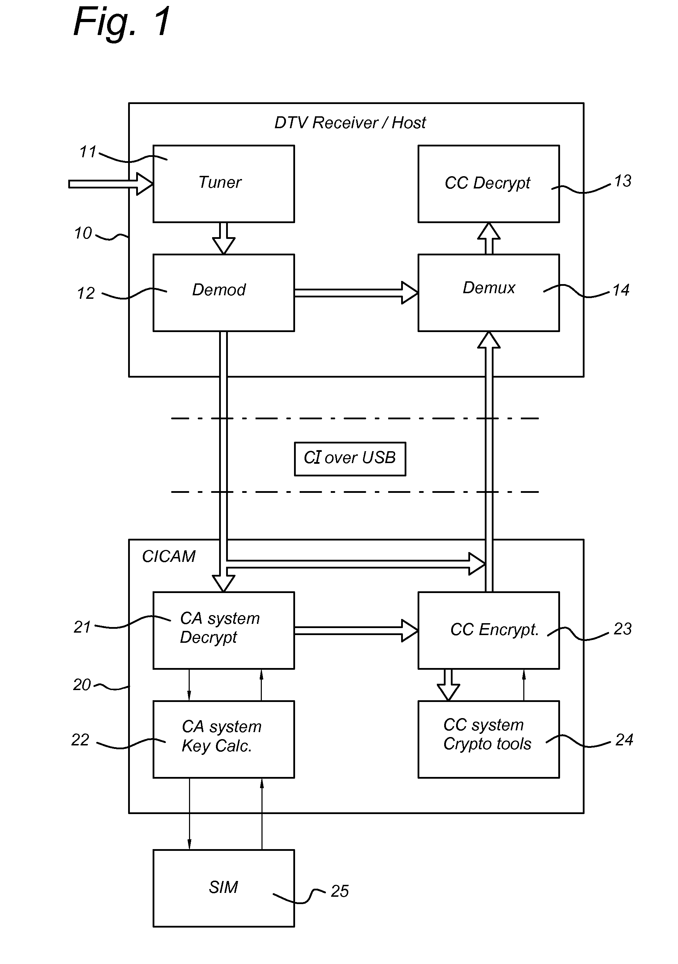

Figure 1 schematically shows a system of a CAM 20 and a digital TV receiver or host 10 according to an embodiment of the invention.

Generally, the host 10 is a consumer electronics device that is used to receive and navigate the broadcast digital media. The host includes one or more slots which accept CAMs. In an embodiment, the CAM slot of the host has the form of a Universal Serial Bus (USB) connector. In an embodiment, the slot is configured to receive a Type A USB connector. However, other USB forms (e.g. mini-USB or micro-USB may also be used).

Typically the host device contains some form of tuner 11, a demodulator 12, a demultiplexer (Demux) 14 and media decoders (not shown). These are the usual pre-requisites for the reception of digital TV.

For free-to-air material this is all that is required to receive and decode digital content, for content protected by a CA system then a CAM is required. DVB CAMs that comply with the CI standard EN 50221 have no Content Control system 23, 24 to protect the descrambled content. In CI systems, content where the CA system protection has been removed is passed to the host unprotected.

Hosts compliant with the CI Plus standard have a Content Control decryption module 13. The CI Plus host interoperates with the CAM to provide a secure content control system 13, 23, 24 to protect high value content which has been CA decrypted.

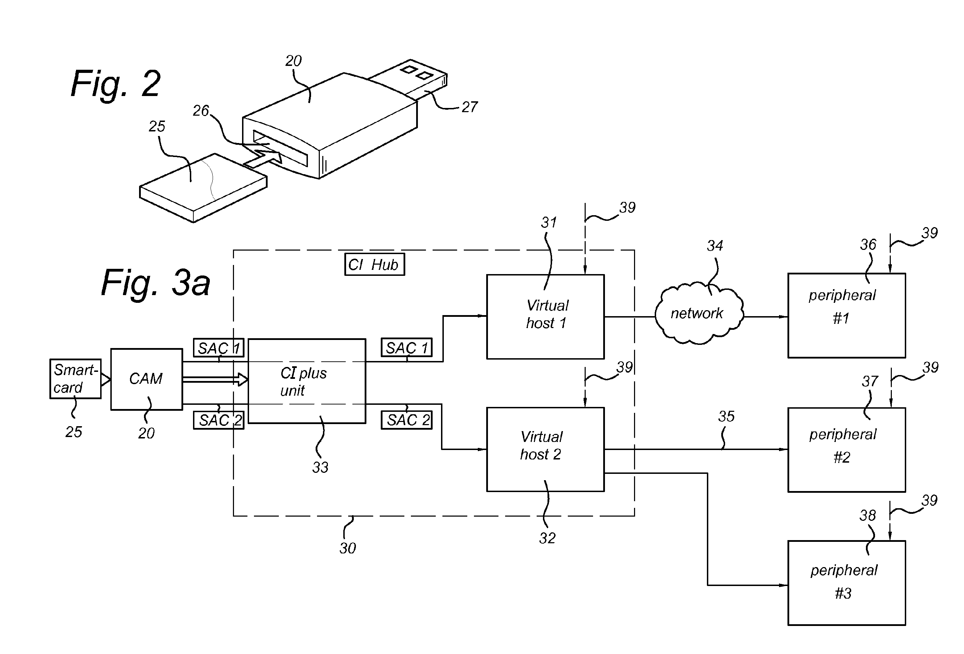

The CAM contains the consumer end of the CA system. It comprises a CA decryption module 21 for decrypting secure content, a CA key calculation module 22 for calculating keys based in part on data from a smart card 25, and a smart card interface 26 (see figure 2) for receiving the smart card.

CI Plus CAMS (hereafter also denoted as CAM) also include Content Control (CC) modules for re-encrypting the CA decrypted signal. The Content Control encryption module 23 re-encrypts the content using a key that has been agreed on a shared secure channel between the CAM and the host. The CC system crypto tools module 24 facilitates in generating keys and setting up a secure channel with the host. Module 24 also contains cryptographic tools and features which enable the CAM and CI host to mutually authenticate each other's trustworthiness.

Figure 2 schematically shows a perspective view of CAM 20 according to an embodiment of the invention. In this example, the CAM 20 has a slot 26 for receiving a module 25 which functions as smart card 25. The module 25 can have the form factor of a mini-SIM (Subscriber Identity Module) as is known from mobile telephone applications. A micro-SIM form factor may also be used. The CAM 20 has a male Type A USB (Universal Serial Bus) connector 27 for insertion into a corresponding female USB connector of a host (not shown).

When the CAM 20 connector 27 is inserted in a corresponding USB slot of a host, a CI over USB connection is formed. In the downstream direction (defined as the direction from the host to the CAM) the CA encrypted content is transmitted, and in the upstream direction (defined as the direction from the CAM to the host), the decrypted content (CI standard) or CC encrypted content (CI Plus standard) is transmitted.

Figure 3A schematically shows a CI hub 30 according to an embodiment of the invention. The CI hub 30 comprises a CI Plus unit 33 which can connect to an external CAM 20. The external CAM 20 is typically provided by a digital video broadcasting operator.

The CI hub also provides at least one (in the present example two, but any number is in principle possible) virtual host 31, 32. The virtual hosts 31, 32 are called virtual since they look, from the point of view of the CAM, like a regular CI host. Each virtual host 31, 32 is configured to setup a Secure Authenticated Channel (SAC) connection with the CAM (in cooperation with the CC system crypto tools 24 of the CAM 20) for secure (CC encrypted) reception of CA decrypted content. In the present example, first virtual host 31 sets up connection SAC1 to CI Plus unit 33, and second virtual host 32 sets up second connection SAC2 to unit 33. Each virtual host 31, 32 can also be configured to transmit CA encrypted Transport Stream (TS) packets through the CI Plus unit 33 for CA decryption by the CAM 20.

Preferably the connection between CI Plus unit 33 and CAM 20 can be made via a USB connection, for example as described in reference to figures 1, 2, and 6. A USB 2.0 or USB 3.0 connection has sufficient bandwidth to allow simultaneous communication, both downstream of CA encrypted content and upstream of CA decrypted, CC encrypted content, of multiple transport streams (multi-stream mode). In the present application, the direction from the CI Plus unit to the CAM is called downstream and the reverse direction is called upstream.

The CA encrypted content will typically be provided by each of the peripheral devices 36, 37, 38, which may receive it through for example a tuner connection 39. In an alternative embodiment, one or more of the virtual hosts has a connection 39 (dashed line in figure 3a) for receiving CA encrypted content. In this alternative embodiment, the peripheral devices serve more like simple displays, in the sense that they play no role in providing the content that is to be descrambled by the CAM. In either embodiment, the CA encrypted content is provided to the CAM via the SAC connections.

A virtual host 31, 32 can set up one SAC connection with the CAM 20. However, a virtual host 31, 32 may serve a plurality of peripheral devices 36, 37, 38. In the example of figure 3A, first virtual host 31 receives CC encrypted transport stream data via SAC1, and transmits said data via a data network 34 to a first peripheral device 36 (for example a television in a different room). The data network 34 can be any wired or wireless network. The second virtual host 32 receives a first CC encrypted transport stream data via SAC2 and provides it to second peripheral 37, and receives a further, second, CC encrypted transport stream data via SAC2 and provides it to third peripheral 38. Second virtual host 32 thus serves a plurality of peripheral devices 37, 38 simultaneously, with first and second CC encrypted transport streams (which may or may not be the same).

Preferably, the CC encrypted transport streams received by the virtual hosts 31, 32 via respectively SAC1 and SAC2 from the CAM 20, are transmitted in encrypted form to the peripheral devices 36, 37, 38. However, in order for the peripheral devices 36, 37, 38 to be able to decode the encrypted transport streams (for example for decoding and displaying), the decryption key must be made known to the peripheral device. One possible solution is that the virtual host simply forwards the encrypted packets from the SAC connection to the peripheral device, and, via a further (preferably encrypted) channel with the peripheral device, signals the CC decryption key to the peripheral device. Alternatively, the virtual host 31, 32 can decrypt the TS packets and transmit the decrypted packets to the peripheral device using any suitable secured or unsecured protocol.

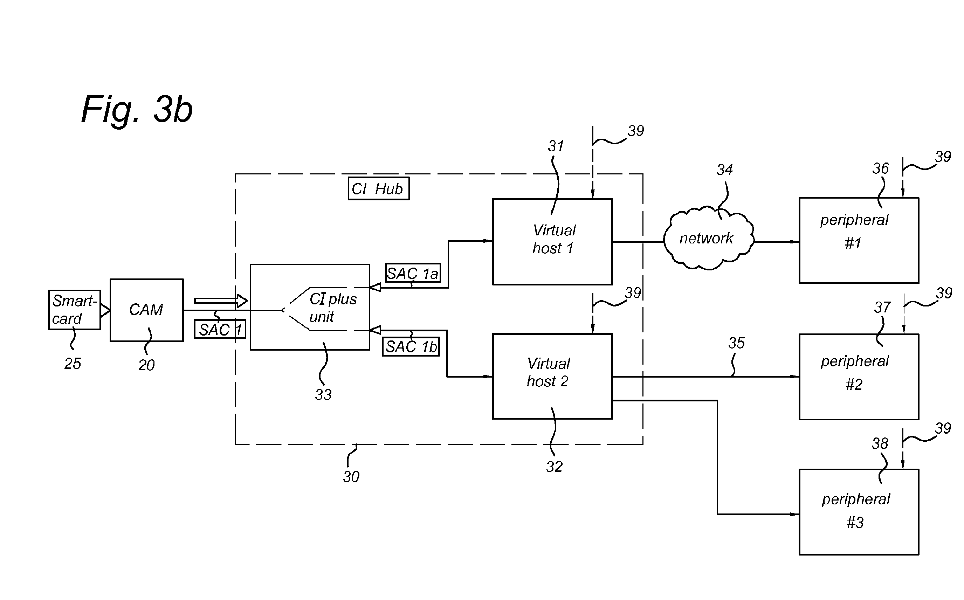

Figure 3B shows an alternative embodiment of a CI hub 30 according the invention. The features in common with the embodiment of figure 3a need not be described again. In this variant, only a single SAC connection (SAC1) is set up between the CI plus unit 33 and the CAM 20. In this embodiment, it appears to the CAM as if a connection with just one (virtual) host is made. The CI plus unit 33 serves as a (de)multiplexer, distributing the content received via SAC1 from CAM 20 to the virtual hosts 31, 32 through respective SAC1a and SAC1b. For example, first virtual host 31 may supply, via SAC1a, a first CA encrypted TS to the CI plus unit 33 and second virtual host may supply, via SAC1b, a second CA encrypted TS to the CI plus unit 33. The CI plus unit 33 sends both transport streams to the CAM, along with control messages from the respective virtual hosts to the CAM, to cause it to decrypt the streams. The returned CC encrypted (in the case of a CI Plus CAM) or decrypted (plain CI) streams are then distributed by the CI plus unit to the corresponding virtual host 31, 32.

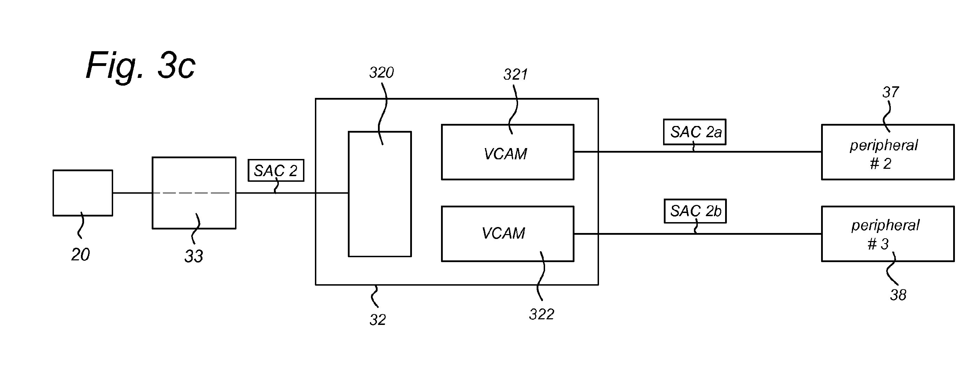

In an embodiment, the peripheral devices 37, 38 are also able to set up SAC connections, for example because the peripheral devices 37, 38 have a Common Interface unit. This is illustrated in figure 3C. In the example of figure 3C, the virtual host 32 has two virtual CAMs (VCAMs), 321, 322. In general, the virtual host can have one or more VCAMs. Each VCAM 321, 322 is able to set up a SAC connection with a peripheral device. To the peripheral device 37, 38, it appears as if they are connected to a "real" CAM, such as CAM 20, hence the term "virtual CAM".

Virtual host 32 effectively servers as a CAM bridge, connecting CI peripherals 37, 38 with CAM 20.

The connections between the virtual host 32 and the peripheral devices 37, 38 may be USB connections, but any physical or wireless connection between virtual host 32 and peripheral devices 37, 38 suitable for setting up a SAC connection is possible. In the present example, VCAM 321 sets up connection SAC2a with peripheral device 37 and VCAM 322 sets up connection SAC2b with peripheral device 38. The virtual host 32 further comprises a distribution unit 320 which is configured to switch and convert packets coming in via SAC2 from a "real" CAM 20 to either VCAM 321 or VCAM 322, for further transmission over SAC2a or SAC2b, respectively, to peripheral devices 37 or 38, respectively.

In an embodiment, VCAMs 321 and/or 322 are configured to setup a SAC2a, SAC2b with a peripheral device 37, 38 using the same keys as SAC2. In that case, the packets coming in from SAC2 do not need to be decrypted and re-encrypted for transmission over SAC2a and SAC2b. Alternatively, the distribution unit 320 may be configured to decrypt all packets incoming via SAC2 and re-encrypt them according to the encryption requirements of SAC2a or SAC2b, depending on where the packet is headed.

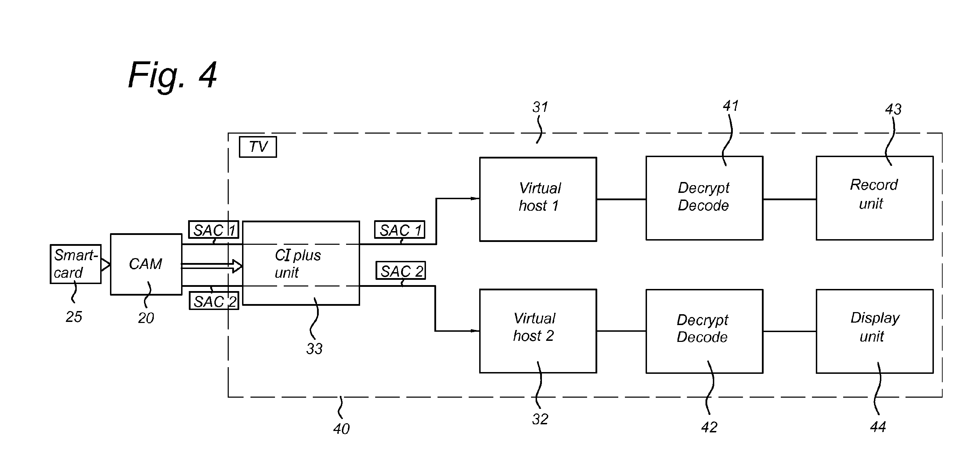

Figure 4 schematically shows a television 40 according to an embodiment of the invention. The television 40 has a CI Plus unit 33 and virtual hosts 31, 32 as described in reference to figure 3A. The CA encrypted transport streams are provided via from one or more of the TV's tuners (not shown) to the CI Plus hosts 31, 32, which sends them on to the CAM 20.

The exemplary television 40 has two "consumers" of transport streams. One is a recording unit 43, and the other is a display unit 44, and each unit 43, 44 may request and receive a different transport stream. Both units 43, 44 may be equipped with a decryption and decoding block 41, 42, for decrypting the CC encrypted stream and for decoding the transport streams into, for example, uncompressed video and audio data for rendering. The recording unit 43 may also be configured to record the data in the original encrypted and/or encoded form, so decryption and decoding block 41 is not always necessary. In this case, the connection between the virtual host 31, 32 and the "consumers" 41-44 can be any suitable connection. For example, the connection may be configured so that the virtual hosts 31, 32 can signal, in a secure manner, the required CC decryption key to the consumers 41-44. Technically it is also possible to decrypt the signal in the virtual hosts and transmit the transport streams to the consumers in unencrypted form, but this is not preferred as it goes against the goal of the CI Plus system, which is to prevent interception of unencrypted transport streams.

Any of the further details disclosed in reference to figure 3B may also be applied to any of the virtual hosts of figure 3A and 4.

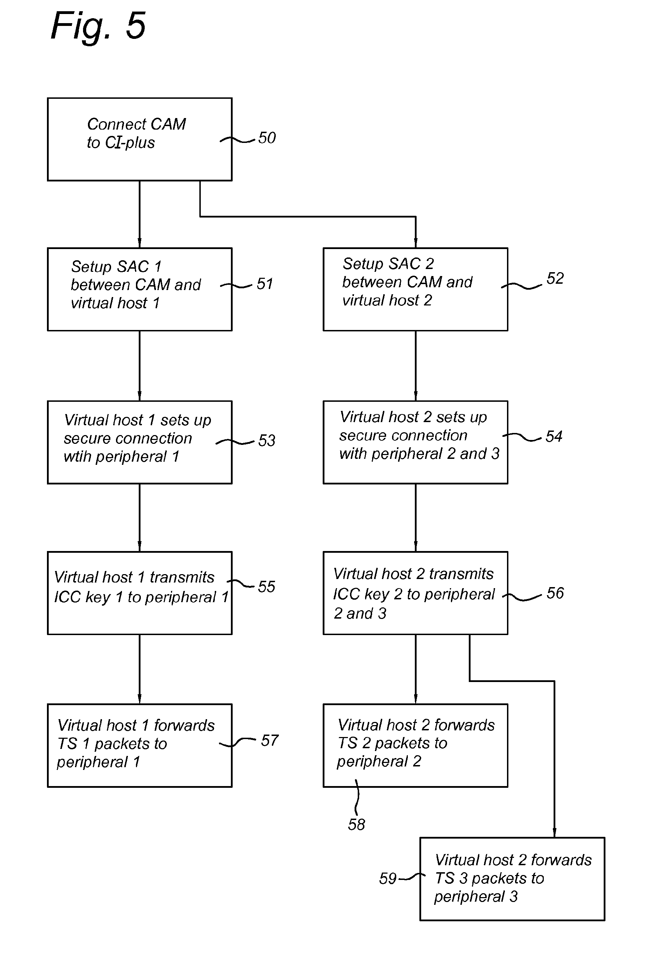

Figure 5 schematically shows a method for setting up connections with two peripheral devices according to an embodiment of the invention. The steps in figure 5 are not necessarily in chronological order; it will be clear to a skilled person which of the steps can for example be executed in parallel or can be interchanged with other steps.

In step 50, a CAM 20 is connected to a CI Plus unit 33. The CI Plus unit is connected to a first and second virtual host 31, 32 as described in reference to figures 3 and 4. In steps 51 and 52, a first and second Secure Authenticated Channel connection (SAC1 and SAC2) is set up between the CAM 20 and the first and second virtual host 31, 32 respectively.

In step 53, first virtual host 31 sets up a secure connection with a first peripheral device 36. In step 54, second virtual host 32 sets up secure connections with second and third peripheral devices 37 and 38. This may be done as described in reference to figure 3B.

In step 55, the first virtual host 31 transmits the decryption key corresponding to the CC encryption of SAC1 to first peripheral device 36. After step 55, in step 57 the first virtual host 31 starts forwarding CC encrypted transport packets, corresponding to a first transport stream and received via SAC1, to first peripheral device 36.

In step 56, the second virtual host 32 transmits the decryption key corresponding to the CC encryption of the content transmitted from the CAM via SAC2 to the second and third peripheral devices 37, 38. After step 56, in step 58 the second virtual host 32 starts forwarding CC encrypted transport packets, corresponding to a second transport stream and received via SAC2, to second peripheral device 37. In step 59 the second virtual host 32 starts forwarding CC encrypted transport packets, corresponding to a third transport stream and also received via SAC2, to third peripheral device 38.

A method according to an embodiment of the invention only comprises steps 50, 51, 53, 55, and 57. Another method comprises the steps 50, 52, 54, 56, 58 and 59.

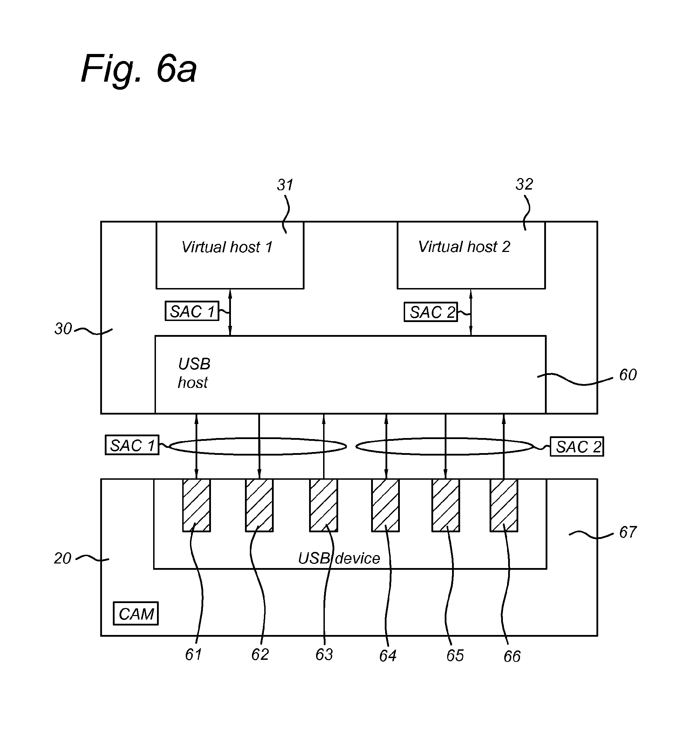

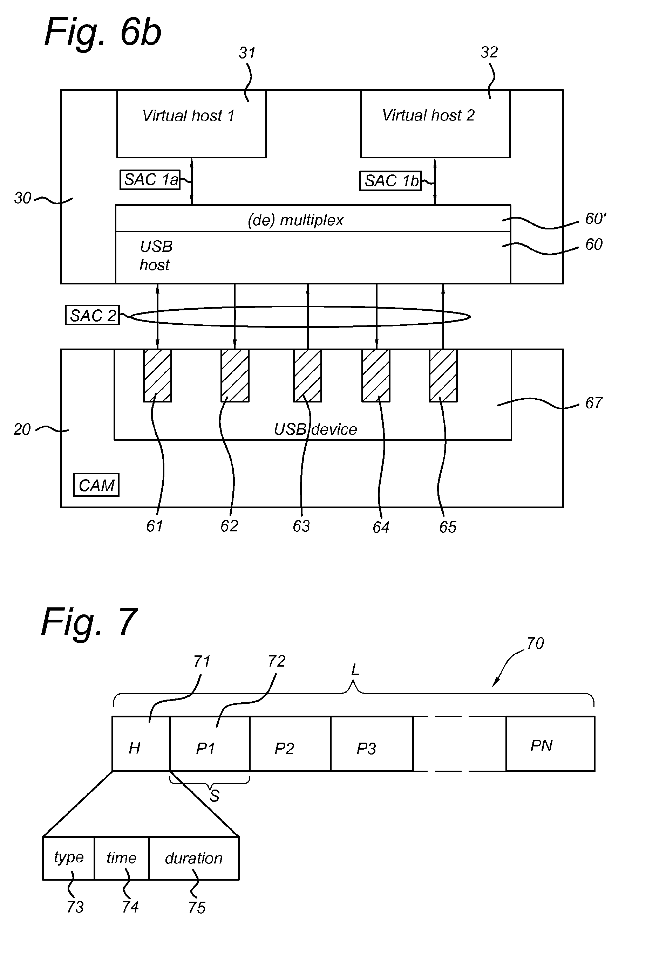

Before further details of the CI-CAM connection over USB are provided in reference to figures 6a and 6b, some background information on USB is given.

USB was originally designed as a standard for connecting peripheral devices to computers. In recent years, it has become commonly used in all sorts of (consumer) electronics devices. USB standard 1.0 offered 1.5 Mbit/s transfer speed. Later versions increased this speed, with USB 2.0 offering 480 Mbit/s over 4 physical wires. The wires are typically labelled Vcc (5 Volt), GND (ground), D-, and D+, with the latter two wires forming a twisted-pair for data.

USB 3.0, described in the USB 3.0 Specification Revision 1.0 dated June 6, 2011, is similar to earlier versions of USB in that it is a cable bus supporting data exchange between a host computer and a wide range of simultaneously accessible peripherals. The attached peripherals share bandwidth through a host-scheduled protocol. The bus allows peripherals to be attached, configured, used, and detached while the host and other peripherals are in operation. However, in contrast to USB 2.0 and earlier versions, USB 3.0 utilizes 10 wires. In addition to the 4 wires of previous USB standards, six wires for three additional twisted pairs are added.

USB 3.0 utilizes a dual-bus architecture that provides backward compatibility with USB 2.0. It provides for simultaneous operation of SuperSpeed and non-SuperSpeed (USB 2.0 speeds) information exchanges.

USB device communication is based on logical channels called "pipes" between a host controller (in one device) to a logical entity called the endpoint, on another device. There are two types of pipes: stream (or data) and message pipes. A message pipe is bi-directional and is used for control transfers. Message pipes use the control transfer type, and are typically used for command traffic from the host to the device and vice versa. A stream pipe is a uni-directional pipe connected to a uni-directional endpoint that transfers data using one of three other transfer types: isochronous, interrupt, or bulk transfer.

Isochronous transfers take place at some guaranteed data rate, with possible occasional data loss. Interrupt transfers are suitable for quick responses, for example for mice and keyboard peripherals. Bulk transfers are large sporadic transfers using all remaining available bandwidth, but with no guarantees on bandwidth or latency.

In USB 3.0, most pipes come into existence when the device is configured by system software. However, one message pipe, the Default Control Pipe, always exists once a device has been powered and is in the default state, to provide access to the device's configuration, status, and control information.

Also in USB 3.0, the bulk transfer type has an extension for SuperSpeed called Streams. Streams provide inband, protocol-level support for multiplexing multiple independent logical data streams through a standard bulk pipe.

Despite the fact that USB 3.0 can be said to be a full-duplex protocol, the logical pipes are still considered to be uni-directional. That is, for bi-direction data communication (data exchange), two logical pipes must be created (see e.g. section 4.4.6 on Bulk Transfers of the USB 3.0 Specification Rev 1.0 dated June 6, 2011). While it is sometimes said that USB 3.0 supports bi-directional data pipes, these bi-directional data pipes in fact consist of two logical pipes, one for upstream and one for downstream data communications. If a future USB version defines true bi-directional data pipes (using e.g. a bulk transfer type), then the invention may be practiced using such a bi-directional pipe. Such a bi-directional pipe can then be considered to embody two uni-directional data pipes as described in this disclosure.

In the present embodiments, we use bulk transfer type as the exemplary and preferred transfer type for data transfer over USB, both in USB 2.0 and USB 3.0 systems. In USB 3.0, bulk transfer types are also called stream or SuperSpeed transfer types. In principle, the invention can also be applied using isochronous transfer type or even interrupt transfer type for data transfer. However, bulk transfer type is considered the most practical type.

Figure 6a shows a schematic view of logical pipes between a CAM device 20 connected to a USB controller 60 of a CI hub 30 as described in reference to figure 3A. In this embodiment, the CI hub 30 is thus a host in both the sense of the CI and CI Plus standard, and also a host (controller) in the sense of the USB standard, so that the hub includes the USB host controller 60. However, it is possible to conceive embodiments in which the CAM device plays the role of the USB host.

The USB device 67 in the CAM device 20 has six logical endpoints 61-66. Each endpoint corresponds one-to-one with a USB pipe. Endpoint 61 is connected to the message pipe, for bi-directionally transmitting control traffic to and from the CAM device using a control transfer type. In an embodiment, pipe 61 is the default control pipe (also known as "pipe 0"). Endpoint 62 is connected to a downstream pipe for receiving (at the CAM device) CA encrypted video data from first virtual host 31. As mentioned previously, in an embodiment, this pipe uses the bulk transfer type. Endpoint 63 is connected to an upstream pipe for transmitting (from the CAM device) CC encrypted video data to the first virtual host 31. In an embodiment, this pipe also uses the bulk transfer type. The data pipes can be any USB data pipes, including USB 3.0 (or later) SuperSpeed pipes. Pipes 61, 62, 63 belong to connection SAC1.

Endpoints 64 and 65 are connected to downstream and upstream pipes respectively, which are connected via the USB controller 60 to the second virtual host 32. The control messages related to the second virtual host are exchanged via endpoint 66 of a bidirectional message pipe. Pipes 64, 65, 66 belong to connection SAC2.

The CI host 33 (not shown in figure 6a) which includes the USB host 60 simply directs the traffic to and from the endpoints 61-63 to first virtual host 31 and the traffic to and from endpoints 64-66 to second virtual host 32.

This arrangement of transmitting control and encrypted/decrypted signal data over separate pipes has a number of advantages. For one, the control traffic is transmitted over a pipe with hardware checks to ensure the integrity of the control data. In contrast, some data transfer types allow a small possibility of transmission errors. For video signals, this is generally not a critical issue, since a small error in video data will likely go unnoticed. In an advantageous embodiment, the USB bulk transfer type is used, which has, at the built-in error checking. That way, the control layer on top of the USB connection layer does not need to implement its own error checking (the result from the USB layer can be used). In an advantageous embodiment, the link layer on top of the USB layer implements audio/video stream clock recovery (which USB does not provide) but not error detection and correction.

The CA encrypted and CA decrypted data can in principle be in any (streaming) format. However, Transport Streams (TS) and ISO BMFF are the most common carriers of the type of data (audio/video) transmitted between CI and CAM.

Figure 6b shows a schematic view of logical pipes between a CAM device 20 connected to a USB controller 60 of a CI hub 30 as described in reference to figure 3A. The main difference is that in this embodiment, there is only a single bidirectional message pipe 61. The pipes 61-65 together form a single SAC connection (SAC1). The CI plus host 33 (not shown) has an additional layer 60' for (de)multiplexing the traffic to and from the virtual hosts 31, 32 as described in reference to figure 3b. From the point of view of the CAM, in this embodiment, there is a single CI (virtual) host connected to it, which is processing two (audio/video) data streams simultaneously.

The data sent over the USB data pipes of figures 6a and 6b is organized in USB chunks. There are various options available for "repackaging" the CA encrypted/decrypted data for transport over the USB interface between CI en CICAM. In the case of TS input, a straightforward way would be to map each TS packet to a single USB chunk. However, this would not be a very efficient way since TS packets comprise 188 bytes, while USB chunks are typically several kiloBytes (kB) in size. A possible way would be to package items at a higher abstraction layer than the packet layer in separate chunks. For example, TS tables, which are split up and transmitted over several TS packets, can be re-assembled in the CI host and then sent as a single "table chunk" over the USB interface to the CICAM.

Figure 7 shows an example data chunk 70 for transmission over a USB interface (either upstream or downstream). The chunk 70 has a data or payload part 72 and a header 71.

The header 71 can be used to indicate the type of contents of the chunk. For example, it may indicate which table or TS packet is included in the payload. In an embodiment, the header 71 has a type field 73 for characterising the payload. The header 71 may comprise a time field 74 indicating a time stamp of the payload, for example the time stamp of the first TS packet of a transport stream payload. The header 71 may comprise a duration field 75 indicating a duration of the payload. the time field 74 and duration field 75 can be used for clock recovery in the CICAM system.

The payload can comprise N packets P₁, P₂, P₃, ..., P_{N}. In the case of a MPEG transport stream, the size s of the packets may be 188 Bytes (B), while the total size L of the chunk including header and payload may be of the order of 64 kiloByte (kB). For clock recovery, it is not essential that each packet is individually labelled with a time and duration value. Bundling N packets into a single chunk with a single header 71 advantageously prevents overhead compared to known variants in which each packet is encapsulated.

In addition, it is not necessary to include, as some standards do, CRC headers and other error-correction or detection data in the data chunks. For data integrity checks, the native USB bulk transfer provisions may be used. It is thus not necessary to replicate the error-correcting and detecting part of any transport layer that is mapped to the USB link. This also significantly reduces overhead.

The incoming (to be CA decrypted) TS or ISO BMFF stream (or any other suitable stream that is to be decrypted in the CICAM) can thus be converted by the CI host to a stream of USB data chunks. With the aid of the headers of the USB data chunks and/or messages on the control pipe, the receiving CICAM can reconstruct the TS or ISO BMFF stream, so that the CA encrypted signal can be decrypted. It may not be necessary to fully convert the chunks back to TS or ISO BMFF format - it is sufficient if the CICAM can identify which parts of the incoming data it needs to decrypt. After decryption an optional (for CI PLUS) re-encryption, the CA decrypted data is converted again to USB chunks (if needed), and transmitted from the CICAM back to the CI over the USB link, using a suitable logical pipe. The CI host then recreates the original TS or ISO BMFF format as needed for further processing in the digital receiver or television.

Finally, some explanation is given regarding the control messages. In an embodiment, the default PIPE of the USB device is reserved exclusively for the control-layer of CI/CI PLUS. One or more additional pipes are used to transfer the content. As shown in reference to figure 5, multiple control pipes may be defined. However, for now we assume a single pipe exists. In an embodiment, the control-layer of CI/CI PLUS should be interpreted as the "session layer" and all higher layers in the Command Interfaces Layers stack as shown in figure 4 of CI standard EN 50221 (1997). In other words, traffic generated by the control-layer of CI/CI PLUS is considered control traffic that will be transmitted over the dedicated bidirectional message or control pipe, such as pipe 0.

In summary, in an embodiment, the data pipes transmit chunks with a "tag-length-value" format. The data transmitted over the data pipe is transmitted as chunks, each chunk having a header. The data thus consists of "descriptors" (header) and "payload". In an embodiment, descriptors are time-stamped. Either or both a duration or a second time stamp to mark the end of the data may also be added. The content format should be described. There may be two different content formats, TS (Transport Stream) and ISO BMFF (Base Media File Format).

In an embodiment, for the control layer each packet in the default PIPE has the same "tag-length-value" format as in the common interface. It starts with the protocol objects as defined in EN 50221 7.1.2.

In the foregoing description of the figures, the invention has been described with reference to specific embodiments thereof. It will, however, be evident that various modifications and changes may be made thereto without departing from the scope of the invention as summarized in the attached claims.

It is noted that in the examples reference is mostly made to a CI Plus system. However, the invention of providing a CI hub can also be used in connection with a "plain" CI system, on in general with any interface system for connecting to a CAM, with or without re-encryption of the data after CA decryption in the CAM.

The exemplary embodiments show systems with two or three peripheral devices. The skilled person will understand that more devices may be connected. Even a system with just one peripheral device may be advantageous. In that case, the CI hub can act as a bridge or converter unit for the peripheral device.

Combinations of specific features of various aspects of the invention may be made. An aspect of the invention may be further advantageously enhanced by adding a feature that was described in relation to another aspect of the invention.

It is to be understood that the invention is limited by the annexed claims and its technical equivalents only. In this document and in its claims, the verb "to comprise" and its conjugations are used in their non-limiting sense to mean that items following the word are included, without excluding items not specifically mentioned. In addition, reference to an element by the indefinite article "a" or "an" does not exclude the possibility that more than one of the element is present, unless the context clearly requires that there be one and only one of the elements. The indefinite article "a" or "an" thus usually means "at least one".

## Claims

1. Common Interface, CI, hub (30) comprising a
- CI unit (33) for receiving a Conditional Access Module, CAM (20);
- at least one virtual host unit (31, 32), each virtual host unit being configured to:
- setup a Secure Authenticated Channel, SAC, connection with the CAM, when a CAM is connected to the CI unit (33);
- setup a data connection with a respective peripheral device (35, 36, 37);
and
- receive content data from the CAM via the SAC connection and transmit said content data to the respective peripheral device (35, 36, 37).

2. CI hub according to claim 1, wherein the at least one virtual host unit (32) comprises a virtual CAM (321, 322) for setting up a connection (SAC2a, SAC2b) with the respective peripheral (37, 38).

3. CI hub according to claim 1 or 2, wherein the at least one virtual host unit (32) is configured for setting up a connection to each of a plurality of peripheral devices (37, 38).

4. CI hub according to any of the previous claims, wherein the at least one virtual host unit (32) comprises a distribution unit (320) for distributing content data received via the SAC connection to at least one peripheral device (37, 38).

5. CI hub according to claim 4, wherein the distribution unit (320) is configured to decrypt the content data received via the SAC connection and to re-encrypt said data prior to distribution to the at least one peripheral device (37, 38).

6. CI hub according to any of the previous claims, comprising a plurality of virtual host units (31, 32).

7. CI hub according to any of the previous claims, wherein the CI unit (33) is configured to maintain one Secure Authenticated Channel with the CAM and is comprises a demultiplexing layer (60') for selectively transmitting data received from the CAM to a corresponding virtual host unit (31, 32).

8. CI hub according to any of the previous claims 1-6, wherein the CI unit (33) is configured to maintain for a Secure Authenticated Channel with the CAM for each virtual host unit (31, 32).

9. CI hub according to any of the previous claims, wherein the content data represents a broadcast program, such as a Transport Stream or an ISO BMFF file

10. CI hub according to any of the previous claims, wherein the CAM (20) is connected to the CI unit (33) via a USB connection.

11. CI hub according to claim 10, wherein the USB connection comprises a logical bidirectional control pipe for control traffic related to the data.

12. CI hub according to claim 11, wherein the USB connection comprises one logical bidirectional control pipe for control traffic related to the data for each SAC between the CI unit (33) and the CAM (20).

13. CI hub according to any of the claims 10-12, wherein the USB connection comprises for each peripheral device (36, 37, 38), two logical unidirectional data pipes, one for transmitting CA encrypted data to the CAM (20) and one for receiving CA decrypted data from the CAM.

14. Method for distributing CA decrypted data from a CAM to a peripheral device (36, 37, 38), the method comprising:
- setting up one Secure Authenticated Channel, SAC, connection between each of at least one virtual host unit (31, 32) and the CAM;
- setting up a data connection between each of the at least one virtual host unit (31, 32) and at least one respective peripheral device (36, 37, 38);
- receiving content data from the CAM via the SAC and transmitting said content data to the at least one respective peripheral device (35, 36, 37).
